# EUROPÄISCHE PATENTSCHRIFT

(11) **EP 2 475 940 B1**
(45) Veröffentlichungstag und Bekanntmachung des Hinweises auf die Patenterteilung: **16.04.2014**
(21) Anmeldenummer: 10771682.1
(22) Anmeldetag: 07.09.2010
(51) Int. Cl.: F24J 2/52

(54) **MODULANORDNUNG AUS SOLARMODULEN**
MODULE ARRANGEMENT CONSISTING OF SOLAR MODULES
ENSEMBLE MODULAIRE COMPOSÉ DE MODULES SOLAIRES

(30) Priorität: 10.09.2009 DE 202009011880 U; 10.09.2009 DE 202009012226 U
(43) Veröffentlichungstag der Anmeldung: 18.07.2012
(73) Patentinhaber: SCHÜCO International KG, 33609 Bielefeld (DE)
(72) Erfinder: SALZER, Wadim, 33604 Bielefeld (DE)
(74) Vertreter: Specht, Peter
(86) Internationale Anmeldenummer: PCT/EP2010/063117
(87) Internationale Veröffentlichungsnummer: WO 2011/029822

(56) Entgegenhaltungen:
- EP-A2- 2 042 822
- WO-A1-99/10609
- DE-A1-102007 000 697
- DE-U1-202008 009 192
- US-A1- 2005 257 453

## Beschreibung

Die Erfindung betrifft eine Anordnung aus Solarmodulen auf Flächen, insbesondere Dächern, nach dem Oberbegriff des Anspruchs 1.

Modulanordnungen sind aus der gattungsgemäßen DE 100 47 400 C2 sowie aus der DE 20 2008 007 549 U1 bekannt. Diese Schriften offenbaren jeweils Solarmodulanordnungen, die mittels Montagevorrichtungen in sogenannter Faltanordnung auf einem Dach angeordnet sind, derart, dass sie in einer Seitenansicht eine Zick-Zackanordnung ausbilden. Diese Art der Zick-Zackanordnung ermöglicht es, eine Dachfläche ganz oder nahezu ganz mit Solarmodulen zu bedecken, was die Energiegewinnung optimiert, insbesondere, wenn die Falt- oder Zickzackanordnung in Ost-West-Richtung ausgerichtet ist.

Die EP 2 042 822 A1 zeigt Solarmodule in Zick-Zackanordnung, die oben und unten jeweils auf horizontal verlaufende Hohlprofile aufgelegt werden und sodann mit Abdeckblechen an diesen Hohlprofilen festgeschraubt werden.

Nachteilig bei den genannten Konstruktionen und ganz allgemein beim Stand der Technik - wobei zum technologischen Hintergrund noch die DE 10 2007 000 697 A1, die DE 295 03 315 U1 und die DE 199 34 059 A1 genannt werden - ist der hohe Materialeinsatz in Hinsicht auf die Montagevorrichtungen bzw. Unterkonstruktion. Insbesondere weisen die bekannten Montagevorrichtungen relativ viele Komponenten und Bauteile auf.

Vor diesem Hintergrund ist es ausgehend von dem gattungsgemäßen Stand der Technik die Aufgabe der Erfindung, die gattungsgemäße Anordnung in Hinsicht auf ihre Unterkonstruktion sowie in Hinsicht auf die Montagevorrichtung zu vereinfachen.

Die Erfindung löst diese Aufgabe durch den Gegenstand des Anspruchs 1.

Vorteilhafte Ausgestaltungen der Erfindung sind den Unteransprüchen zu entnehmen.

Der Begriff der Solarmodule umfasst Solarelemente verschiedenster Art, die eine Art vormontiertes Modul ausbilden und die zur Erzeugung von Energie in Form von Strom und Wärme dienen. Die erfindungsgemäße Art der Montage(anordnung) eignet sich also sowohl für Photovoltaik-Module als auch für Thermie-Kollektoren und kann vorzugsweise auf Flachdächern oder Schrägdächern angeordnet werden, aber auch auf beliebigen Freiflächen. Weitere Vorteile sind die aerodynamische Anordnung der Solarmodule, wodurch sich Beschwerungen oder Verankerungen erübrigen.

Erfindungsgemäß ist zunächst vorgesehen, dass zueinander benachbarte Doppelmodulanordnungen - die im Zusammenspiel dann eine Art Zick-Zackanordnung ausbilden - über Koppeleinrichtungen mit Gleitsicherungsfunktion miteinander verbunden sind.

Die Gleitsicherungseinrichtungen wirken einem Gleiten auf einem Untergrund entgegen. Sie stützen sich vorzugsweise ohne ein Befestigungsmittel auf einem Untergrund ab und sind vorzugsweise derart ausgebildet, dass sie eine relativ hohe Haftreibung zum Untergrund aufweisen. Beschwerende Gewichte sind daher in der Regel nicht erforderlich.

Zwar sind Gleitsicherungseinrichtungen zum Aufstellen von Solarmodulen auf ebenem Untergrund an sich bekannt, so aus der DE 10 2007 000 697 A1. In dieser Schrift wurde aber nicht erkannt, dass es auch auf einfache Weise möglich ist, derartige Gleitsicherungseinrichtungen direkt zum Koppeln benachbarter Doppel-Solarmodulanordnungen zu nutzen. Auch hierdurch kann eine aerodynamisch geschlossene und im Wesentlichen "geschlossene" Oberfläche geschaffen werden, die Gewichte und dgl. zum Beschweren der Solarmodulanordnungen erübrigt. Es stellt sich zudem auch nicht das Problem der Aufstellung von Doppelsolarmodulanordnungen, die in der Regel relativ großflächig und schwer sind, da in der Schrift nur Solarmodulanordnungen mit jeweils einem zu einer Himmelsrichtung ausgerichteten Solarmoduf offenbart werden.

Es ist besonders einfach, dass die zwei Solarmodule jeder Doppelmodulanordnung vorzugsweise lediglich über einen oder mehrere Verbinder insbesondere im Bereich ihrer "oberen" Kante miteinander gekoppelt sind und wenn die voneinander abgewandten "unteren" Kanten jeder Doppelmodulanordnung nicht miteinander über ein Profil verbunden sind.

Es ist zweckmäßig und konstruktiv besonders einfach, wenn die Gleitsicherungseinrichtungen über wenigstens einen Verbinder mit einer oder mehreren Doppelmodulanordnungen gekoppelt sind.

Es ist ferner besonders vorteilhaft, wenn die Gleitsicherungseinrichtungen auch die Funktion einer Lastabtragung der Doppelmodulanordnungen in den Untergrund übernehmen.

Besonders bevorzugt sind die Gleitsicherungseinrichtungen derart ausgestaltet, dass der Abstand zwischen den unteren Kanten benachbarter Doppelmodulanordnungen 50 bis 500 mm, vorzugsweise 300 mm beträgt, was die Wartung wiederum vereinfacht.

Vorzugsweise sind die Gleitsicherungseinrichtungen ferner derart ausgestaltet, dass der Zwischenraum zwischen zueinander benachbarten Doppelmodulanordnungen begehbar ist.

Nach einer weiteren bevorzugten Variante ist unter dem Solarmodul, insbesondere unter Glas-Glas-Dünnschicht-Laminatmodulen, wenigstens ein Profil angeordnet, welches eine oder mehrere Kammern aufweist, die zur Aufnahme der Verbinder ausgelegt ist/sind. Das Profil ermöglicht insbesondere das einfache Festlegen der Verbinder am Solarmodul. Alternativ ist es nach einer weniger bevorzugten Ausgestaltung der Erfindung auch denkbar, direkt am Solarmodul ohne das Profil z. B. in einem Glasbereich in Befestigungslöchern oder dgl. die Verbinder festzulegen.

Vorzugsweise sind die zwei Solarmodule der wenigstens einen Doppelmodulanordnung lediglich im Bereich ihrer zueinander weisenden Kanten miteinander gekoppelt. Hierdurch entfallen die nach dem Stand der Technik erforderlichen teuren Tragprofile, insbesondere die unteren Tragprofile bzw. Querträger oder auch Grundstreben genannt. Dies resultiert in Kosteneinsparungen und einer vereinfachten Montage.

Nachfolgend seien nochmals einige Vorteile der Erfindung aufgelistet.

Geschaffen wird eine Montageanordnung, die in bevorzugter Gestaltung ohne zusätzlichen Ballast und oder eine Befestigung am Untergrund auskommt.

Die Montageanordnung eignet sich insbesondere auch für ungerahmte Solarelemente (Laminate, bevorzugt Dünnschichtlaminate aus doppeltem Sicherheitsglas).

Eine separate Unterkonstruktion, die am Gebäude befestigt ist, ist nicht erforderlich, denn das Modul trägt und stützt sich selbst. Auch auf Windleitbleche kann verzichtet werden.

Es wird eine Anordnung mit einem sehr hohen Flächenanteil von Solarelementen geschaffen, die sich durch eine kontrollierte, unversperrte Wasserableitung, eine gute Zugänglichkeit in den Revisionsgängen und ein einfaches und sicheres Kabelverlegen in den Revisionsgängen auszeichnet.

Besonders vorteilhaft ist die verwendete Gleitsicherungseinrichtung auch in Hinsicht auf eine Einhaltung der Reihenabstände, die als Druckelement dient und auch zur Aufnahme von horizontalen Schubkräften, z.B. durch Wind, sowie zur Verbindung mindestens zweier, unterer Solarelementkanten.

Die Gleitsicherung ist vorzugsweise als Auflageplatte zur Lastabtragung ausgebildet.

Die Verbindungswinkel bestehen vorzugsweise aus Edelstahl und werden in Profilnuten geklemmt und zwar in Profilnuten vorzugsweise eines Profils von Solarmodulen in Ausbildung als Laminate mit einem Profil, das als so genanntes Backrail bezeichnet wird (rahmenlose Elemente).

Nachfolgend wird die Erfindung anhand eines Ausführungsbeispiels unter Bezug auf die Zeichnung näher erläutert. Es zeigt:
- Fig. 1: eine perspektivische Darstellung einer aus einer erfindungsgemäßen Montageanordnung gebildeten Anordnung aus Solarmodulen auf einem Flachdach;
- Fig. 2: eine Seitenansicht einer Reihung aus Solarmodulen;
- Fig. 3 und 4: jeweils eine Seitenansicht einer mehrreihigen Solarmodulanordnung und eine Draufsicht auf diese Solarmodulanordnung;
- Figur 5: eine Schnittansicht eines Profils;
- Figur 6: eine Schnittansicht eines Verbinders;
- Figur 7: eine Schnittansicht eines weiteren Verbinders;
- Figur 8A, B: eine Seitenansicht und eine perspektivische Ansicht einer Gleitsicherungseinrichtung;
- Figur 9: eine perspektivische Ansicht einer weiteren Gleitsicherungseinrichtung;
- Fig. 10a,b: eine Frontansicht und eine Seitenansicht einer zweireihigen Solarmodulanordnung;
- Fig. 11 a,b: eine Seitenansicht eines Verbinders und eine Draufsicht auf diesen Verbinder;
- Fig. 12a,b: eine Seitenansicht eines weiteren Verbinders und eine Draufsicht auf diesen Verbinder; und
- Fig. 13: eine Ansicht eines Zugseils.

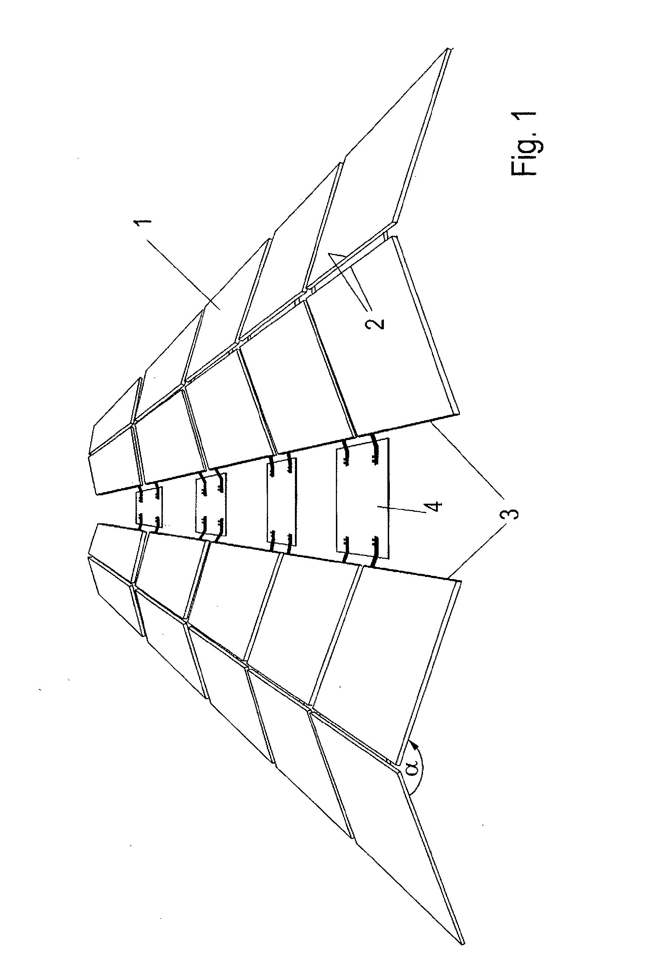

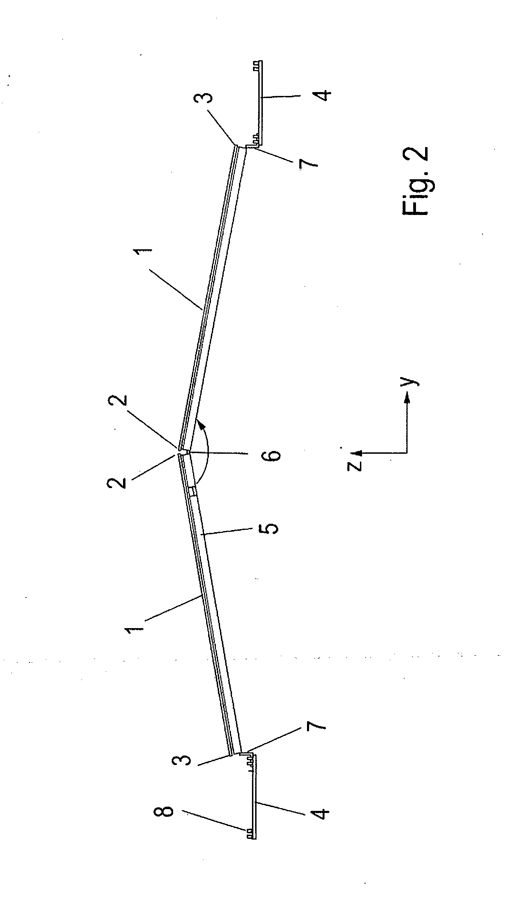

Figur 1 zeigt eine erfindungsgemäße Modulanordnung, die wenigstens zwei - wie in Figur 2 - oder eine Vielzahl von Solarmodulen 1 aufweist.

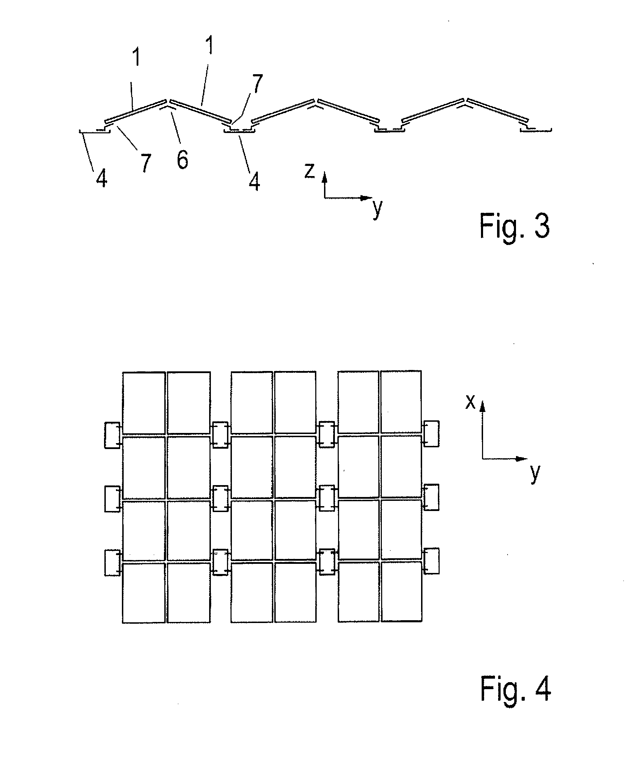

Zur Vereinfachung der Diskussion sind Fig. 2 und 3 mit einem kartesischen Koordinatensystem versehen. Dabei beschreiben die Koordinaten X und Y jeweils die Koordinaten der hier als eben angenommen Untergrund- bzw. Aufstellfläche für die Solarmodule und die ergänzende Koordinate Z die hierzu senkrechte Koordinate. Bei einem Flachdach oder einem sonstigen flachen Untergrund kennzeichnen die X- und Y-Koordinaten entsprechend diese Fläche, wohingegen die Z-Koordinate jeweils die vertikale Koordinate ist. Aus dieser Ausrichtung erklären sich die nachfolgenden Bezeichnungen wie "oben" oder "unten", die aber nicht einschränkend zu verstehen sind, zumal die Erfindung auch für schräg ausgerichtete Untergrundflächen wie z.B. für ein Schrägdach geeignet ist.

Angemerkt sei, dass zwar nachfolgend durchgängig der Begriff des Solarmoduls verwendet wird, dass dieser aber stellvertretend für Module verschiedener Art wie Solarzellenmodule oder Thermiemodule zu verstehen ist.

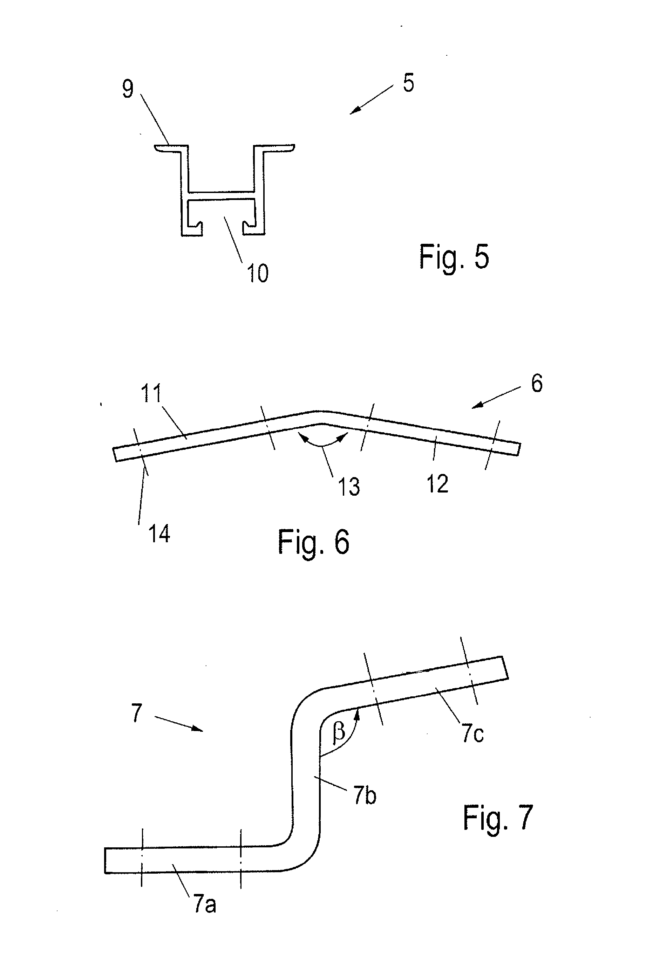

Die Solarmodule 1 der Fig. 1 weisen vorzugsweise eine relativ flache, rechteckige Grundform auf. Jeweils zwei der Solarmodule 1 sind mittels Verbindern 6, 7, die beispielhaft in Fig. 6 und 7 abgebildet sind, miteinander derart gekoppelt, dass jeweils zwei der Solarmodule paarweise im Bereich einer ihrer Außenkanten 3 aneinander liegen und dabei einen Winkel α einschließen, der vorzugsweise - aber nicht zwingend - größer als 90° ist.

Vorzugsweise wird eine Mehrzahl derartiger Doppelmodulanordnungen in einer Reihe (Richtung X) hintereinander angeordnet. Zudem ist es möglich, auf einem Untergrund wie einem Dach, auch mehrere diese Reihen aus Doppelmodulen nebeneinander (Richtung Y) anzuordnen, um eine Dachfläche oder dgl. wie gewünschtinsbesondere auch vollflächig - mit Solarmodulen zu bedecken.

Aus dieser Art der Anordnung ergibt sich die Bezeichnung Zick-Zackanordnung bzw. Faltanordnung.

Gegenüber dem Stand der Technik ist dabei die Unterkonstruktion erheblich vereinfacht worden.

Die Doppelmodulanordnungen sind bei der erfindungsgemäßen Montageanordnung jeweils an den einander zugewandten, in Aufstellposition vertikal oberen Kanten 2 miteinander verbunden, nicht aber im Bereich der voneinander weg weisenden unteren Kanten 3.

Stattdessen wird in montierter Position eine Verbindung durch den Untergrund selbst realisiert. Eine zum Untergrund zusätzliche Verbindung im Bereich der voneinander abgewandten unteren Kanten ist innerhalb einer Doppelmodulanordnung aber nicht vorhanden bzw. wird eingespart.

Gegenüber dem Stand der Technik, wie er aus der DE 20 2008 007 549 U1 bekannt ist, wird damit eine Doppelmodulanordnung mit einem deutlich vereinfachten Aufbau geschaffen, weil auf die dort vorhandenen Zwischenträger bzw. Profile, welche die unteren voneinander abgewandten Kanten jeder Doppelprofilanordnung miteinander verbinden, verzichtet werden kann. Vorzugsweise ist auch im Bereich zwischen den Verbindern 6, 7 und den unteren Kanten 3 keine zusätzliche Stützstrebe vorhanden.

Zueinander benachbarte, aneinander grenzende Doppelmodulanordnungen werden darüber hinaus auch im Bereich der aneinander grenzenden (hier unteren) Kanten 3 über Kopplungseinrichtungen bzw. -elemente miteinander verbunden. Diese Kopplungselemente realisieren vorzugsweise eine derart beabstandete Verbindung der unteren Kanten 3 benachbarter Doppelmodulanordnungen, dass zu Montagezwecken oder Wartungsarbeiten eine gute Zugänglichkeit zu den Doppelmodulanordnungen gewährleistet ist.

Vorzugsweise beträgt der Abstand zwischen den unteren Kanten 3 der benachbarten Doppelmodulanordnungen 50 bis 500 mm, vorzugsweise 300 mm. Der Abstand der unteren Kanten 3 wird dabei vorzugsweise durch eines oder mehrere Kopplungseinrichtungen vorgegeben.

Nachfolgend seien bevorzugte Ausgestaltungen dieser Kopplungselemente näher betrachtet.

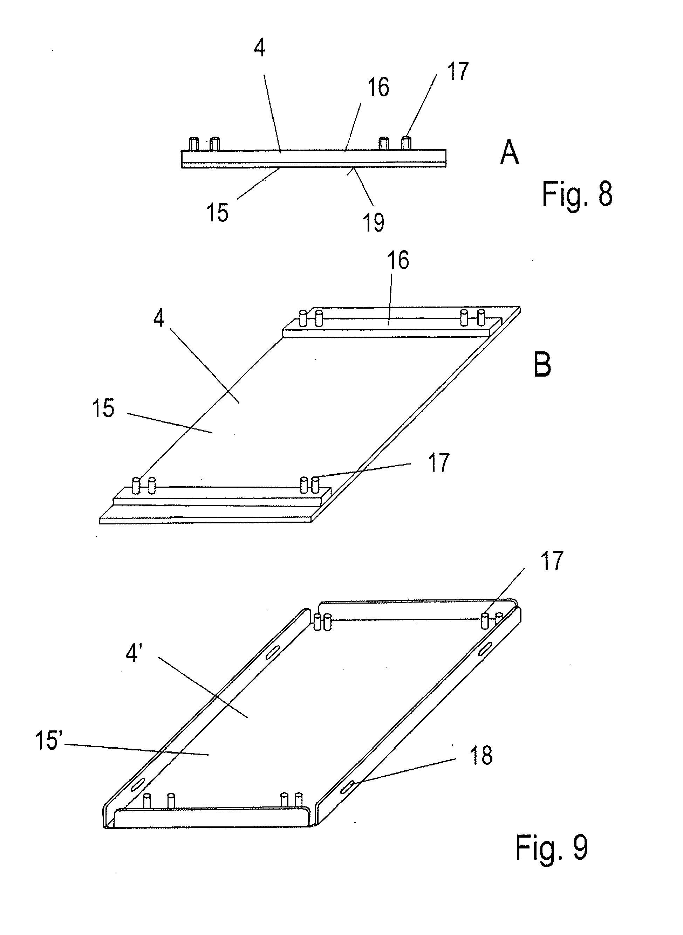

In besonders bevorzugter Ausgestaltung bilden die Kopplungselemente bzw. - einrichtungen ein- oder mehrstückige Gleitsicherungseinrichtungen 4 (siehe insbesondere Fig. 8 bis 9) aus.

Die Gleitsicherungseinrichtungen 4 sind vorzugsweise nicht nur zur Realisierung einer Gleitsicherung für die Doppelmodulanordnungen ausgebildet sondern übernehmen auch die Funktion der Lastabtragung in den Untergrund.

An jeder Gleitsicherungseinrichtung 4 sind vorzugsweise mindestens zwei Kanten 3 zweier benachbarter Doppelmodulanordnungen angeordnet bzw. festgelegt, vorzugsweise vier der Kanten 3, so dass pro Gleitsicherungseinrichtung entsprechend vier dieser Solarmodule montierbar sind bzw. montiert sind.

Figur 2 zeigt eine Reihe aus Doppelmodulanordnungen in einer Seitenansicht, wobei die Solarmodule 1 wie zu Figur 1 beschrieben, winklig zueinander aufgestellt sind. Dabei sind die oberen Kanten 2 in einem geringen Abstand gehalten. Unter den Solarelementen 1 (hier ein Glas-Glas-Dünnschichtlaminat) befinden sich Profile 5 vorzugsweise Aluminiumprofile, die vorzugsweise Kammern aufweisen, die zur Aufnahme der Verbinder oder sonstigen Befestigungsmitteln dienen.

An den oberen Kanten 2 ist ein Verbinder 6 in die Ausnehmungen zweier benachbarter Solarmodule 1 eingeführt.

Der Verbinder 6 ist - siehe Fig. 6 - vorzugsweise als einstückiges Winkelstück ausgebildet und weist zwei Schenkel 11, 12 auf, die den Winkel α einschließen.

Im bevorzugten Fall beträgt dieser Winkel α 160°. Hierdurch weisen die Solarelemente 1 eine schräge Neigung bzw.- Ausrichtung von 10 Grad zu einem ebenen - beispielsweise horizontal ausgerichteten - Untergrund auf.

Die unteren Kanten 3 benachbarter Doppelmodulanordnungen sind ebenfalls in einem größeren Kollektorfeld zueinander gerichtet. Zur Montage wird ebenfalls in das Profil 5 an den unteren Enden ein Verbinder 7 eingesetzt. Derart ist der Verbinder 7 an dem Profil 5 und damit an dem Solarmodul festgelegt. Es ist denkbar, das Profil 5 und den Verbinder 7 miteinander zu verschrauben. Auf der von der Kante 3 bzw. dem Profil 5 abgewandten Seite wird der Verbinder 7 dagegen mit einer der Gleitsicherungseinrichtungen 4 verbunden.

Diese Gleitsicherungseinrichtung der Fig. 8 ist eine sehr vorteilhafte Ausgestaltung. Daneben sind aber auch andere vorteilhafte Ausgestaltungen der Erfindung denkbar, bei welchen die unteren Kanten 3 der Solarelemente 1 vorzugsweise direkt miteinander verbunden werden.

Die vorzugsweise verwendeten Gleitsicherungen 4 nehmen Druckkräfte auf, die von den einzelnen Modulreihen durch die 10 Grad-Anordnung aufgebracht werden. Insgesamt heben sich die Druckkräfte auf.

Die Gleitsicherungen 4 sind vorzugsweise mit vorkragenden Stiften 8 versehen, vorzugsweise Gewindestiften, auf die die Verbinder 7 mit entsprechenden Bohrungen zur leichten Montage einfach aufgesetzt werden. Es ist dann lediglich noch erforderlich, die Verbinder 7 mit einer Mutter an den Gleitsicherungen auf den Gewindestiften 8 festzuschrauben.

Die Gleitsicherungen 4 bilden darüber hinaus vorzugsweise einen so genannten Revisionsgang zwischen benachbarten Doppelmodulanordnungen aus, was die Wartung - wie bereits erwähnt - der Modulanordnung deutlich vereinfacht.

Figur 2 verdeutlicht, dass kein weiteres Profilmontagetragsystem, keine weitere Querstrebe innerhalb der Doppelmodulanordnungen, keine Stützstreben oder dergleichen wie im Stand der Technik beschrieben erforderlich sind.

Besonders bevorzugt wird die Zick-Zackanordnung lediglich durch die Gleitsicherungseinrichtung 4 zwischen benachbarten Doppelmodulanordnungen, einen Verbinder 7 zwischen der Geitsicherungseinrichtung 4 und der Doppelmodulanordnung, ein Profil 5, auf dem das Solarmodul angeordnet ist, einen Verbinder 6 zwischen den oberen Kanten bzw. Profilen 5 benachbarter Solarmodule einer Doppelmodulanordnung gebildet. Hieran können sich wiederum Verbinder 7, Gleitsicherungseinrichtungen 4 usw. anschließen.

An den Enden größerer Modulfelder kann zur Aufnahme der Druckkräfte zwischen den Profilen 5 bzw. zwischen den Verbindern 7 ein Zugelement angeordnet werden. Dieses Zugelement (hier nicht dargestellt) kann ein Zugseil oder eine Zugstange sein. Hierdurch ist das gesamte Modulfeld ohne eine Befestigung im Untergrund oder ohne Gewichte frei aufstellbar. Die aerodynamische Anordnung verhindert überdies, dass Windkräfte unter Flächen greifen können, so dass ein Abheben nicht möglich ist.

Die Figuren 3 und 4 zeigen sinnbildlich noch einmal ein Modulfeld, das beliebig erweitert und vergrößert werden kann. Figur 3 zeigt dabei die für diese Anmeldung wichtige Reihenfolge der Befestigung, bestehend aus Gleitsicherung, Verbinder, Profil mit Solarmodul, Verbinder, Profil mit Solarmodul, Verbinder, Gleitsicherungseinrichtung usw.

Unterhalb der Solarelemente befinden sich keine verbindenden oder tragenden Bauteile. Eine Entwässerung ist problemlos möglich, ebenso wie der Zugang zu den Modulen.

Figur 5 zeigt in einer Schnittdarstellung vergrößert das Profil 5, das Flächen 9 aufweist, auf denen die Solarmodule 1 (hier nicht dargestellt) aufliegen können und ggf. festgeklebt sein können.

Das Profil 5 weist ferner eine offene Hohlkammer 10 auf, in welcher der Verbinder oder andere Montageelemente angeordnet werden können.

Dieses Profil 5 ist eine besonders vorteilhafte Option als Halteelement für die Solarmodule. Alternativ ist es denkbar, die Verbinder an einem Modulrahmen - wenn vorhanden - oder auch direkt an einem sonstigen Element des Moduls festzulegen bzw. mit diesem zu koppeln, so an speziellen Befestigungslöchern oder dgl..

Figur 6 zeigt im Schnitt einen Verbinder 6, der die beiden Solarmodule einer Doppelmodulanordnung im Bereich der zueinander weisenden oberen Kanten 2 mit einander verbindet.

Der Verbinder 6 weist zumindest die zwei Schenkeln 11 und 12 auf, die winklig zueinander ausgerichtet sind. Bevorzugt liegt der von Schenkeln 11, 12 eingeschlossene Winkel α zwischen 100° und 175°, vorzugsweise bei 160°.

Darüber hinaus weist der Verbinder 6 an den Schenkeln 11, 12 vorzugsweise Durchgangsbohrungen z.B. Gewindebohrungen auf, die zum einfachen Klemmen des Verbinders 6 mittels Schrauben in dem Profil 5 vorgesehen sind.

Figur 7 zeigt einen doppelt gebogenen Verbinder 7, der zur Festlegung der unteren Kanten 3 der Solarelemente 1 ausgelegt ist. Der Verbinder 7 weist einen Auflageschenkel 7a auf, einen hier senkrecht ausgerichtete Vertikalschenkel 7b, und einen hier in einem Winkel β von 90° + (180° - α)/2 = 180° - α/2 ausgerichteten weiteren Schrägschenkel 7c zur Festlegung an den Solarmodulen. Der Verbinder 7 weist vorzugsweise ferner ebenfalls Bohrungen auf, die zur Verbindung mit dem Profil 5 bzw. mit der Gleitsicherungseinrichtung 4 ausgelegt sind.

Die Figur 8A und B zeigt eine Gleitsicherungseinrichtung 4, die im Wesentlichen als Verbindungselement zwischen den unteren Kanten 3 der zueinander weisenden Kanten 3 benachbarter Doppelmodulanordnungen dient.

Der Abstand der Verbindung ist mit 300 mm relativ groß gewählt und ergibt dadurch den Vorteil, dass zwischen den Doppelmodulanordnungen ein Revisionsgang gebildet wird. Dieser Revisionsgang ist nicht unbedingt erforderlich, dient aber auch vorteilhaft zum Verlegen der Stromkabel.

Figur 8A zeigt eine erste Gleitsicherungseinrichtung in einer Seitenansicht, wobei die Gleitsicherungseinrichtung hier aus einem unteren Blech 15 besteht, auf dem mindestens ein Druckstab 16 angeordnet ist. Auf dem Druckstab 16, der auch als Distanzstab bezeichnet werden könnte, befinden sich Stifte 17, vorzugsweise Gewindestifte, zur Verbindung der Gleitsicherungseinrichtung mit dem Verbinder 7 für die unteren Kanten 3 der Solarelemente 1.

Figur 9 zeigt ebenfalls eine Gleitsicherungseinrichtung 4', die aus Kostengründen ohne Druckstäbe ausgebildet ist. Um dem Blech 15' zusätzliche Stabilität, insbesondere Druckstabilität, zu geben, ist das Blech 15' an den Seiten gekantet. Zusätzliche Sicken oder Blechversteifungen sind eine weitere vorteilhafte Ergänzung. Neben den Stiften 17 weist die Gleitsicherungseinrichtung 4' in den seitlichen Kantungen Langlöcher 18 auf, die zur Befestigung von Kabelschellen und dergleichen dienen.

Grundsätzlich kann die Gleitsicherungseinrichtung 4 an ihrer Unterseite 19, also an ihrer der dem Dach zugewandten Seite, eine besondere Ausgestaltung, vorzugsweise eine Aufrauhung oder eine reibungserhöhende Beschichtung aufweisen.

Diese kann als eine Klebefläche oder eine gummierte Fläche ausgebildet sein oder mit Streifen wie z.B. EPDM-Streifen versehen sein oder in sonstiger Weise derart ausgebildet sein, dass ein Verrutschen der Elemente auf dem Untergrund verhindert wird.

Hintergrund hierfür ist die Tatsache, dass Windkräfte, die auf das Modulfeld wirken, nur relativ geringe abhebende Wirkung haben aber eine relativ große schiebende Wirkung, d.h. geringere Kräfte in vertikaler Richtung und größere Kräfte in horizontaler Richtung. Die Gleitsicherungen eignen sich daher auch ohne zusätzliche Beschwerung und ohne Befestigung an der Dach- oder Untergrundfläche, entsprechende Windlasten aufzunehmen. Die Standfläche ist auch so groß (vorzugsweise beträgt sie mehr als 200 mm * 200 mm, insbesondere mehr als 400 mm * 300 mm, so dass die Gewichtskräfte gut verteilt werden. Vorzugsweise liegen die Gleitsicherungseinrichtungen 4 dann lediglich auf einem Untergrund auf und sind dort nicht mit Befestigungsmitteln festgelegt. Diese Art der Modulanordnung ist ganz besonders kostengünstig, leicht zu montieren und dennoch besonders sicher.

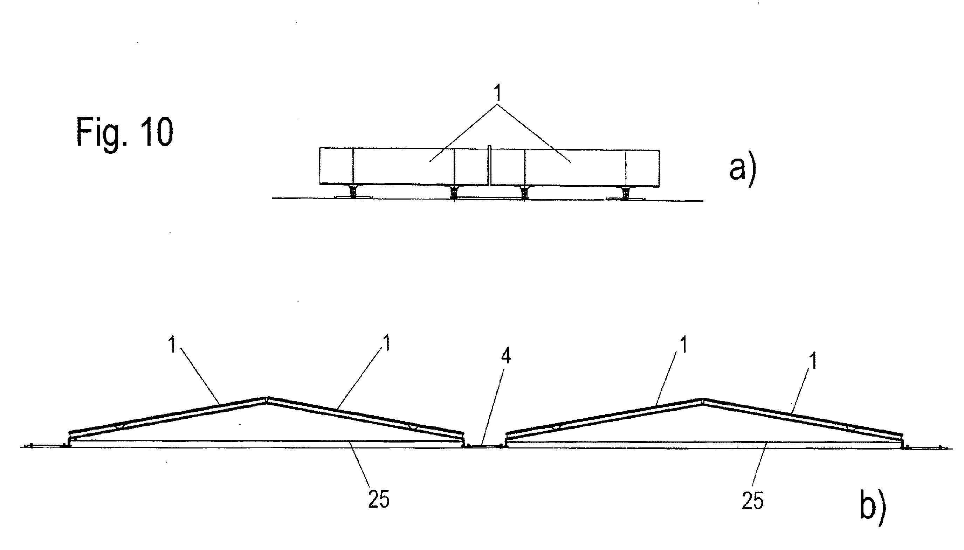

Besonders gut erschließt sich dies auch aus der Fig. 10, welche in Fig. 10a eine Frontansicht und in Fig. 10b eine Seitenansicht einer zweireihigen Solarmodulanordnung zeigt. Die Anordnung ist derart, dass ein Abheben durch Wind einfach und sicher verhindert wird.

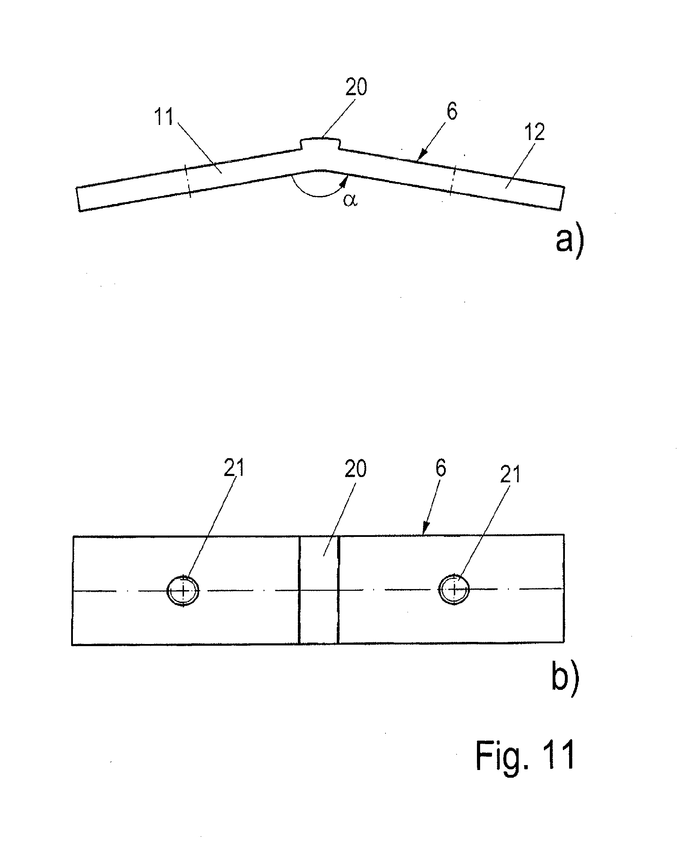

Die Fig. 11a, b zeigen eine Seitenansicht eines weiteren Ausführungsbeispiels eines Verbinders 6 und eine Draufsicht auf diesen Verbinder 6 mit den zwei Schenkeln 11, 12 und dem Winkel α, der hier bei 160° liegt. Die Schenkel 11, 12 dienen wiederum zum Einstecken in die jeweiligen Kammern der Profile 5. Um den Einschiebeweg des Verbinders 6 in diese Kammern 10 zu begrenzen, ist wenigstens ein Vorsprung 20 am Verbinder 6 ausgebildet. Besonders vorteilhaft ist es, wenn der Vorsprung 20 mittig zwischen den beiden voneinander abgewandten Enden der der Schenkel 11, 12 ausgebildet ist. Derart wird auf einfache Weise ein genauer Abstand zwischen den Solarmodulen sichergestellt, welcher der Breite des wenigstens einen Vorsprungs 20 entspricht oder dem Abstand zwischen beispielsweise zwei Vorsprüngen. Fig. 11 zeigt zudem die bereits erwähnten Gewindebohrungen (Bezugszeichen 21) zum ergänzenden Festlegen des Verbinders 6 in dem Profil 5 durch Schrauben.

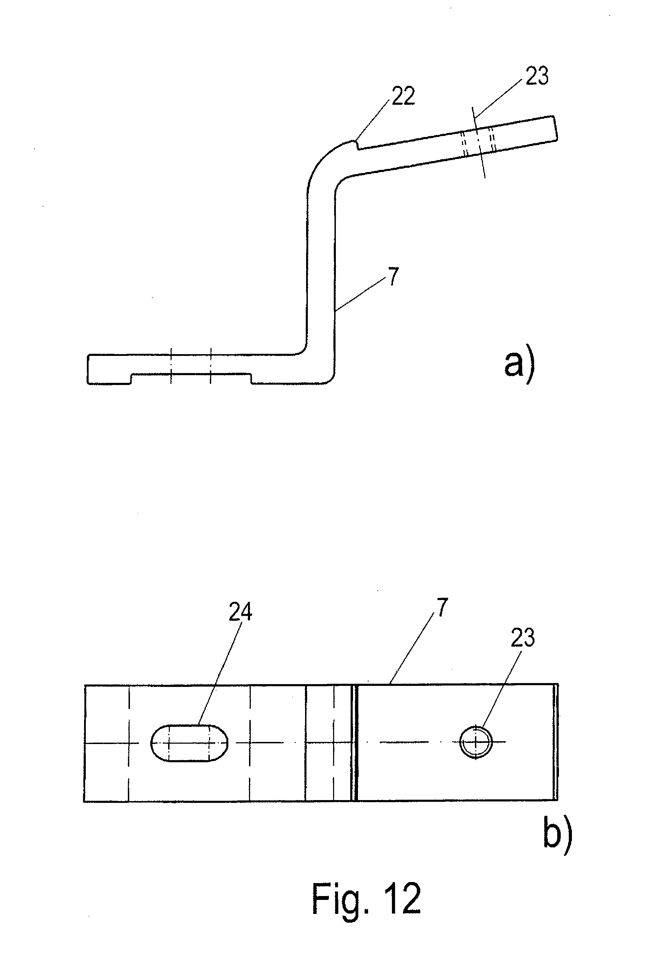

Fig. 12a, b zeigt eine Seitenansicht eines weiteren Verbinders 7 und eine Draufsicht auf diesen Verbinder 7. Auch diese Verbinder ist mit einem Vorsprung versehen (Bezugszeichen 22), welcher den Einschiebeweg des entsprechenden Schenkels 7c in die Kammer 10 des Profils 5 begrenzt, so dass auch in diesem im montierten Zustand unteren Bereich des Solarmoduls auf einfache Weise ein definierter Sitz des Solarmoduls bzw. ein definierter Sitz des Verbinders 7 am Solarmodul sichergestellt ist. Auch Fig. 11 zeigt Gewindebohrungen (Bezugszeichen 23) bzw. ein Langloch 24, einmal zum ergänzenden Festlegen des Verbinders 7 in dem Profil durch Schrauben und einmal zum Aufstecken auf Stifte an den Gleitsicherungseinrichtungen 4.

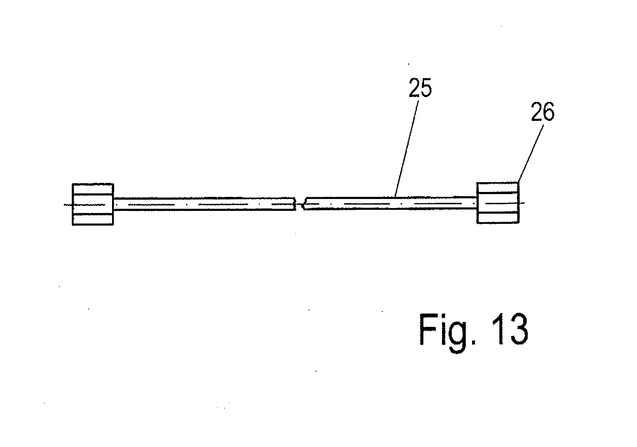

Fig. 13 zeigt schließlich eine Ansicht des bereits erwähnten Zugelementes hier in Form eines Zugseils 25 mit Befestigungselementen an den voneinander abgewandten Enden zur Aufnahme der Zugkräfte zwischen den Profilen 5 bzw. zwischen den Verbindern 7.

### Bezugsziffern:

- 1: Solarelement
- 2: Obere Kante
- 3: Untere Kante
- 4: Gleitsicherung
- 5: Profil
- 6: Verbinder
- 7: Verbinder mit Schenkeln 7a, b, c
- 8: Stift
- 9: Fläche
- 10: Nut

- 11: Schenkel
- 12: Schenkel
- 13: Winkel
- 14: Bohrung
- 15: Blech
- 16: Druckstab
- 17: Stift
- 18: Langloch
- 19: Unterseite

- 20: Vorsprung
- 21: Gewindebohrungen
- 22: Vorsprung
- 23: Gewindebohrung
- 24: Langloch
- 25: Zugseils
- 26: Befestigungselemente

## Patentansprüche

1. Modulanordnung, die folgendes aufweist:
a. Doppelmodulanordnungen aus jeweils zwei winklig zueinander ausgerichteten Solarmodulen;
b. wobei die zwei Solarmodule (1) der einzelnen Doppelmodulanordnungen zumindest im Bereich ihrer zueinander weisenden oberen Kanten (2) miteinander gekoppelt sind.
c. wobei die zwei Solarmodule (1) jeder Doppelmodulanordnung über einen oder mehrere Verbinder (6) miteinander gekoppelt sind,
d. wobei der Verbinder (6) zum Verbinden der zwei Module einer Doppelmodulanordnung winklig ausgebildet ist und zwei Schenkel (11, 12) aufweist, die einen Winkel α einschließen, der zwischen 95° und 175° liegt,
e. wobei unter den Solarmodulen, insbesondere unter Glas-Glas-Dünnschicht-Laminatmodulen, eines oder mehrere Profile (5) angeordnet ist, welches eine oder mehrere Kammern aufweist,
f. wobei benachbarte Doppelmodulanordnungen über wenigstens eine oder mehrere Koppeleinrichtungen miteinander verbunden sind, die Gleitsicherungseinrichtungen (4) aufweisen, **dadurch gekennzeichnet, dass**
g. die eine oder mehrere Kammern des Profils oder der Profile (5) zum Festlegen der Verbinder (6, 7) durch Aufnahme der Verbinder (6, 7) ausgelegt ist/sind.

2. Modulanordnung nach Anspruch 1, **dadurch gekennzeichnet, dass** ein weiterer Verbinder (7) zur Festlegung der unteren Kanten (3) der Solarelemente (1) einen Auflageschenkel (7a) aufweist und wenigstens einen hierzu winkligen Schrägschenkel (7c) zur Festlegung an den Solarmodulen, wobei dieser Verbinder (7) in das Profil (5) an dessen unterem Ende eingesetzt ist.

3. Modulanordnung nach Anspruch 1 oder 2, **dadurch gekennzeichnet, dass** an den oberen Kanten (2) der Verbinder (6) in die Kammern der Profile (5) zweier benachbarter Solarmodule (1) eingeführt ist.

4. Modulanordnung nach einem der vorstehenden Ansprüche, **dadurch gekennzeichnet, dass** die Gleitsicherungseinrichtungen (4) auf einem Untergrund aufliegen und dort nicht mit Befestigungsmitteln festgelegt sind.

5. Modulanordnung nach einem der vorstehenden Ansprüche, **dadurch gekennzeichnet, dass** an jeder Gleitsicherungseinrichtung (4) mindestens zwei Kanten (3) zweier benachbarter Doppelmodulanordnungen angeordnet bzw. festgelegt sind, vorzugsweise vier der Kanten (3), so dass zueinander benachbarte, aneinander grenzende Doppelmodulanordnungen im Bereich der aneinander grenzenden unteren Kanten (3) über die als Gleitsicherungseinrichtungen ausgebildeten Kopplungseinrichtungen bzw. -elemente miteinander verbunden sind.

6. Modulanordnung nach einem der vorstehenden Ansprüche, **dadurch gekennzeichnet, dass** die Gleitsicherungseinrichtungen (4) über wenigstens einen der Verbinder (7) mit einer oder mehreren weiteren der Doppelmodulanordnungen gekoppelt sind.

7. Modulanordnung nach einem der vorstehenden Ansprüche, **dadurch gekennzeichnet, dass** die Gleitsicherungseinrichtungen (4) derart ausgestaltet sind, dass der Abstand zwischen den unteren Kanten benachbarter Doppelmodulanordnungen 50 bis 500 mm, vorzugsweise 300 mm beträgt.

8. Modulanordnung nach einem der vorstehenden Ansprüche, **dadurch gekennzeichnet, dass** die Gleitsicherungseinrichtungen (4) derart ausgestaltet sind, dass der Zwischenraum zwischen zueinander benachbarten Doppelmodulanordnungen begehbar ist.

9. Modulanordnung nach einem der vorstehenden Ansprüche, **dadurch gekennzeichnet, dass** die Gleitsicherungseinrichtungen (4) die Funktion einer Lastabtragung der Doppelmodulanordnungen in den Untergrund übernehmen.

10. Modulanordnung nach einem der vorstehenden Ansprüche, **dadurch gekennzeichnet, dass** die Gleitsicherungseinrichtungen (4) eine Standfläche auf einem Untergrund aufweisen, die mehr als 200 mm * 200 mm, insbesondere mehr als 400 mm * 300 mm beträgt.

11. Modulanordnung nach einem der vorstehenden Ansprüche, **dadurch gekennzeichnet, dass** die Gleitsicherungseinrichtungen (4) auf einem Untergrund aufliegen und dort über eine ggf. vorhandene Klebeschicht hinaus nicht mit Befestigungsmitteln befestigt sind.

12. Modulanordnung nach einem der vorstehenden Ansprüche, **dadurch gekennzeichnet, dass** die Gleitsicherungseinrichtung ein vorzugsweise auf einem Untergrund in montierter Position vorzugsweise unteres Blech (15) aufweist.

13. Modulanordnung nach einem der vorstehenden Ansprüche, **dadurch gekennzeichnet, dass** das Blech (15) derart ausgestaltet ist, dass auf ihm mindestens ein Druckstab (16) angeordnet ist und dass auf dem Druckstab (16) die Stifte (17) zur Verbindung der Gleitsicherungseinrichtung mit dem Verbinder (7) für die unteren Kanten (3) der Solarelemente (1) angeordnet sind.

14. Modulanordnung nach einem der vorstehenden Ansprüche, **dadurch gekennzeichnet, dass** das Blech (15) einseitig aufgerauht ausgebildet ist oder mit einer reibungserhöhenden Beschichtung versehen ist.

15. Modulanordnung nach einem der vorstehenden Ansprüche, **dadurch gekennzeichnet, dass** das Blech (15) eine oder mehrere Verstärkungssicken und/oder -kantungen aufweist.

16. Modulanordnung nach einem der vorstehenden Ansprüche, **dadurch gekennzeichnet, dass** die voneinander abgewandten Kanten (3) jeder Doppelmodulanordnung nicht miteinander über eine Stützstrebe verbunden sind.

17. Modulanordnung nach einem der vorstehenden Ansprüche, **dadurch gekennzeichnet, dass** die Gleitsicherungseinrichtungen (4) mit vorkragenden Stiften (8, 17) versehen sind, auf welche Schenkel der Verbinder (7) mit entsprechenden Bohrungen aufgesetzt sind.

18. Modulanordnung nach einem der vorstehenden Ansprüche, **dadurch gekennzeichnet, dass** das Profil (5) Flächen (9) aufweist, auf denen die Solarmodule (1) aufliegen.

19. Modulanordnung nach einem der vorstehenden Ansprüche, **dadurch gekennzeichnet, dass** das Profil (5) eine offene Hohlkammer (10) aufweist, in welche der oder die Verbinder (6, 7) einsteckbar ist/sind.

## Claims

1. Module arrangement comprising the following:
a. double module arrangements each consisting of two solar modules oriented at an angle to each other;
b. wherein the two solar modules (1) of the individual double module arrangements are coupled to each other at least in the region of their opposing upper edges (2),
c. wherein the two solar modules (1) of each double module arrangement are coupled to each other via one or more connectors (6),
d. wherein the connector (6) for connecting the two modules of a double module arrangement is formed at an angle and has two limbs (11, 12) which form an angle α, said angle being between 95° and 175°,
e. wherein one or more profiles (5) are arranged under the solar modules, and in particular under glass-glass thin film laminate modules, said profiles having one or more chambers,
f. wherein adjacent double module arrangements are connected to each other via at least one or more coupling devices, said coupling devices having anti-slip devices (4),
**characterized in that**
g. the one or more chambers of the profile or profiles (5) is/are designed to secure the connector (6, 7) by receiving said connector (6, 7).

2. The module arrangement according to claim 1, **characterized in that** a further connector (7) has a bearing limb (7a) for fixing the lower edges (3) of the solar elements (1) and at least one sloping limb (7c) at an angle thereto for fixing on the solar modules, wherein this connector (7) is inserted into the profile (5) at its lower end.

3. The module arrangement according to claim 1 or 2, **characterized in that** at the upper edges (2) the connector (6) is inserted into the chambers of the profiles (5) of two neighbouring solar modules (1).

4. The module arrangement according to any one of the preceding claims, **characterized in that** the anti-slip devices (4) rest on a subsurface and are not fixed there with fastening means.

5. The module arrangement according to any one of the preceding claims, **characterized in that** at least two edges (3), preferably four of the edges (3), of two neighbouring double module arrangements are arranged or fixed on each anti-slip device (4), so that adjoining double module arrangements which are adjacent to one another in the area of the adjacent lower edges (3) are interconnected via the coupling devices or elements configured as anti-slip devices.

6. The module arrangement according to any one of the preceding claims, **characterized in that** the anti-slip devices (4) are coupled via at least one of the connectors (7) to one or more further double module arrangements.

7. The module arrangement according to any one of the preceding claims, **characterized in that** the anti-slip devices (4) are configured in such a manner that the distance between the lower edges of neighbouring double module arrangements is 50 to 500 mm, preferably 300 mm.

8. The module arrangement according to any one of the preceding claims, **characterized in that** the anti-slip devices (4) are configured in such a manner that the intermediate space between neighbouring double module arrangements can be walked upon.

9. The module arrangement according to any one of the preceding claims, **characterized in that** the anti-slip devices (4) take on the function of removing the load of the double module arrangements into the subsurface.

10. The module arrangement according to any one of the preceding claims, **characterized in that** the anti-slip devices (4) have a floor space on a subsurface which is more than 200 mm * 200 mm, in particular more than 400 mm * 300 mm.

11. The module arrangement according to any one of the preceding claims, **characterized in that** the anti-slip devices (4) rest on a subsurface and are not fastened there with fastening means beyond an adhesive layer which may be present.

12. The module arrangement according to any one of the preceding claims, **characterized in that** the anti-slip device comprises a preferably lower sheet (15) preferably on a subsurface in the mounted position.

13. The module arrangement according to any one of the preceding claims, **characterized in that** the sheet (15) is configured in such a manner that at least one compression member (16) is arranged thereon and that the pins (17) for connection of the anti-slip device to the connector (7) for the lower edges (3) of the solar elements (1) are arranged on the compression member (16).

14. The module arrangement according to any one of the preceding claims, **characterized in that** the sheet (15) is configured to be roughened on one side or provided with a friction-enhancing coating.

15. The module arrangement according to any one of the preceding claims, **characterized in that** the sheet (15) has one or more reinforcing beads and/or cants.

16. The module arrangement according to any one of the preceding claims, **characterized in that** the edges (3) of each double module arrangement facing away from one another are not interconnected by means of a supporting strut.

17. The module arrangement according to any one of the preceding claims, **characterized in that** the anti-slip devices (4) are provided with protruding pins (8, 17) on which limbs of the connectors (7) are placed with corresponding holes.

18. The module arrangement according to any one of the preceding claims, **characterized in that** the profile (5) has surfaces (9) on which the solar modules (1) rest.

19. The module arrangement according to any one of the preceding claims, **characterized in that** the profile (5) has an open hollow chamber (10) in which the connector or connectors (6, 7) can be inserted.

## Revendications

1. Ensemble modulaire qui présente ce qui suit :
a. ensembles modulaires doubles composés respectivement de deux modules solaires orientés de manière angulaire l'un à l'autre ;
b. les deux modules solaires (1) des différents ensembles modulaires doubles étant couplés entre eux au moins dans la zone de leurs arêtes supérieures (2) tournées l'une vers l'autre ;
c. les deux modules solaires (1) de chaque ensemble modulaire double étant couplés ensemble par un ou plusieurs raccords (6) ;
d. le raccord (6) étant conformé pour raccorder les deux modules d'un ensemble modulaire double de manière angulaire et présentant deux branches (11, 12) qui forment un angle α compris entre 95° et 175° ;
e. un ou plusieurs profilés (5) qui présente(nt) une ou plusieurs chambres étant disposés sous les modules solaires, en particulier sous des modules laminés à couches minces biverre,
f. des ensembles modulaires doubles voisins étant raccordés entre eux par au moins un ou plusieurs dispositifs de couplage qui présentent des dispositifs de protection contre un glissement (4), **caractérisé en ce que**
g. l'une ou plusieurs chambres du profilé ou des profilés (5) est/sont conçue(s) pour la fixation des raccords (6, 7) par réception des raccords (6, 7).

2. Ensemble modulaire selon la revendication 1, **caractérisé en ce qu'**un autre raccord (7) présente, pour la fixation des arêtes inférieures (3) des éléments solaires (1), une branche d'appui (7a) et au moins une branche oblique (7c) angulaire par rapport à celle-ci pour la fixation sur les modules solaires, ces raccords (7) étant insérés dans le profilé (5) sur son extrémité inférieure.

3. Ensemble modulaire selon la revendication 1 ou 2, **caractérisé en ce que** sur les arêtes supérieures (2), le raccord (6) est introduit dans les chambres des profilés (5) de deux modules solaires (1) voisins.

4. Ensemble modulaire selon l'une quelconque des revendications précédentes, **caractérisé en ce que** les dispositifs de protection contre un glissement (4) reposent sur un fond et n'y sont pas fixés avec des moyens de fixation.

5. Ensemble modulaire selon l'une quelconque des revendications précédentes, **caractérisé en ce que** sur chaque dispositif de protection contre un glissement (4), au moins deux arêtes (3) de deux ensembles modulaires doubles voisins sont disposées ou fixées, de préférence quatre des arêtes (3) de sorte que des ensembles modulaires doubles voisins l'un de l'autre, confinant l'un à l'autre soient reliés entre eux dans la zone des arêtes inférieures (3) confinant l'une à l'autre par les dispositifs ou éléments de couplage réalisés comme des dispositifs de protection contre un glissement.

6. Ensemble modulaire selon l'une quelconque des revendications précédentes, **caractérisé en ce que** les dispositifs de protection contre un glissement (4) sont couplés par au moins l'un des raccords (7) avec un ou plusieurs autres des dispositifs modulaires doubles.

7. Ensemble modulaire selon l'une quelconque des revendications précédentes, **caractérisé en ce que** les dispositifs de protection contre un glissement (4) sont conçus de telle manière que la distance entre les arêtes inférieures d'ensembles modulaires doubles voisins soit comprise entre 50 et 500 mm, s'élève de préférence à 300 mm.

8. Ensemble modulaire selon l'une quelconque des revendications précédentes, **caractérisé en ce que** les dispositifs de protection contre un glissement (4) sont conçus de telle manière que l'espace intermédiaire entre des ensembles modulaires doubles voisins l'un de l'autre puisse être accessible.

9. Ensemble modulaire selon l'une quelconque des revendications précédentes, **caractérisé en ce que** les dispositifs de protection contre un glissement (4) assument la fonction d'un transfert de charge des ensembles modulaires doubles dans le fond.

10. Ensemble modulaire selon l'une quelconque des revendications précédentes, **caractérisé en ce que** les dispositifs de protection contre un glissement (4) présentent une surface d'appui sur un fond qui est supérieure à 200 * 200 mm, en particulier à 400 * 300 mm.

11. Ensemble modulaire selon l'une quelconque des revendications précédentes, **caractérisé en ce que** les dispositifs de protection contre un glissement (4) reposent sur un fond et, au-delà, d'une éventuelle couche adhésive n'y sont pas attachés par des moyens de fixation.

12. Ensemble modulaire selon l'une quelconque des revendications précédentes, **caractérisé en ce que** les dispositifs de protection contre un glissement présentent une tôle (15), de préférence inférieure, de préférence sur un fond en position montée.

13. Ensemble modulaire selon l'une quelconque des revendications précédentes, **caractérisé en ce que** la tôle (15) est configurée de telle manière qu'au moins une barre de compression (16) soit disposée sur elle et **en ce que** sur la barre de compression (16) les tiges (17) sont disposées pour la liaison du dispositif de protection contre un glissement avec le raccord (7) pour les arêtes inférieures (3) des éléments solaires (1).

14. Ensemble modulaire selon l'une quelconque des revendications précédentes, **caractérisé en ce que** la tôle (15) est réalisée brossée d'un côté ou est pourvue d'un revêtement augmentant le frottement.

15. Ensemble modulaire selon l'une quelconque des revendications précédentes, **caractérisé en ce que** la tôle (15) présente une ou plusieurs moulures et/ou arêtes de renforcement.

16. Ensemble modulaire selon l'une quelconque des revendications précédentes, **caractérisé en ce que** les arêtes (3) éloignées les unes des autres de chaque ensemble modulaire double ne sont pas reliées entre elles par un montant d'appui.

17. Ensemble modulaire selon l'une quelconque des revendications précédentes, **caractérisé en ce que** les dispositifs de protection contre un glissement (4) sont pourvus de tiges en saillie (8, 17), sur lesquelles sont placées des branches des raccords (7) avec des perçages correspondants.

18. Ensemble modulaire selon l'une quelconque des revendications précédentes, **caractérisé en ce que** le profilé (5) présente des surfaces (9), sur lesquelles les modules solaires (1) reposent.

19. Ensemble modulaire selon l'une quelconque des revendications précédentes, **caractérisé en ce que** le profilé (5) présente une chambre creuse (10) ouverte, dans laquelle le ou les raccords (6, 7) peuvent être enfichés.
